# EUROPEAN PATENT APPLICATION

(11) **EP 2 709 025 A1**
(43) Date of publication of application: **19.03.2014**
(21) Application number: 13184642.0
(22) Date of filing: 16.09.2013
(51) Int. Cl.: G06F 17/30, G06Q 30/06

(54) **Asynchronous method and system for integrating user-selectable icons on web pages**

(30) Priority: 17.09.2012 US 201261702070 P
(71) Applicant: ShopAdvisor, Inc., Concord, MA 01742 (US)
(72) Inventor: Lundqvist, Petrus Kristoffer, 00260 Helsinki (FI); Lahtiranta, Atte, Cupertino, CA 95014 (US)
(74) Representative: Hauck Patent- und Rechtsanwälte

(57) **Abstract**

A system and method is described for integrating actionable content on to web pages. Actionable content is content that relates to actions that a user may carry out in response to viewing or interacting with the integrated content. Users actions may involve monitoring the properties of products being presented on web pages and taking actions when certain conditions have been met by the underlying properties of objects, such as availability or price constraints. It is shown that the changes to the products result in objects that are themselves browsable, and as such the changes constitute an overlay web to the underlying web pages. A new class of actionable content is described whose rendering is controlled primarily by policies based on the internal state of represented objects, or on combinations of external and internal policies.

## Description

### FIELD OF THE INVENTION

The present invention relates generally to adding and integrating actionable content on to web pages. Actionable content is content that can be used to indicate certain actions that may be taken by an automated system on behalf of consumers. The actionable content and subsequent actions promote consumers to get more information and make more informed decisions such as purchasing items from online stores. The actionable content and the entailed actions themselves form an interconnected set of entities that may be viewed as comprising a web of entities. Such a web may be browsed by consumers or acted upon by autonomous computing agents, or combinations thereof.

### BACKGROUND OF THE INVENTION

The Internet/web in its current state consists of billions of web pages (or web sites). Many web pages contain items of commercial interest to consumers. The activity of browsing web pages for commercial items of interest and subsequent actions upon items contained on said pages has led to the term "e-commerce" in which consumers browse items of interest, sometimes "watching" said items for several days expecting changes and then possibly engaging in transactions involving said items, e.g., transactions leading to a purchase. It is expected that e-commerce related transactions will form a significant commercial and financial enterprise on the Internet/web.

One important aspect of the actions that a consumer may initiate upon viewing an item of interest on a web page is to "watch" said item, i.e., undertake to monitor said item to see if and when it changes so that a particular action may be taken. A consumer may wish to monitor certain products and to be alerted, i.e., notified, when they go on sale. The consumer may then consider purchasing those products. Moreover, the consumer may only want to be alerted if the price of the selected item satisfies certain conditions, e.g., the price drops by 20%. There are countless reasons why a consumer may initiate watching actions on a particular item.

However, since there exist many web pages, consumers will be overwhelmed by such monitoring activities if undertaken in a manual fashion. Keeping track of all these options and maintaining a coherent and consistent view in the face of such possibilities that may be changing over time is a complex process for a consumer.

On the other hand the task of the web page author is also being further complicated. Not only does the author need to worry about presenting his/her wares in the most beneficial and attractive manner, he/she now has to worry about the ensuing watching, monitoring, purchasing and other miscellaneous actions. Integrating all such activities on a web page is a complicated process and the task of the page author is becoming more and more complicated with the growth of e-commerce. It would therefore seem beneficial to simplify the tasks of authoring web pages and using web pages to monitor and make purchasing decisions.

The features and advantages of the present inventions will be explained in or will be apparent from the following description of preferred embodiments considered together with the accompanying drawings.

### SUMMARY

One approach to enable a simplification of the authoring process is to introduce an intermediate entity that deals with the monitoring and other activities related to the presentation of the products on a web page. The page author is then free to design and author the page without having to worry about how and which items are going to be monitored or "watched" by consumers. Similarly, the product companies need only be concerned with their inventories and other product related issues rather than the management of consumer concerns regarding monitoring and analysis.

Indeed, it may be possible that the intermediate entity could provide information to the product company that would be useful in managing inventories and shipments. For example, a product that is being monitored by a large number of consumers may be accorded special treatment because of the anticipated potential demand, etc.

A major reason why consumers may wish to monitor products is that they undergo frequent changes in price, availability, etc. Items on web pages continuously undergo changes and updates and these updates and changes themselves are informative and could be mined for commercial advantage. For example, the price history of a product may reflect cyclical or other regular behavior and such an insight could lead to commercial advantages for a consumer. A group of attributes may be selected by a consumer to represent a state of a product and examining the past states of a product, or collections of products, may lead to the realization of certain insights.

Thus, the changes and updates for a group of items being watched by themselves form a collection of inter-linked objects, a sort of overlay web of changes that can be browsed, analyzed and mined for information. It is an object of the present invention to facilitate and make easy the task of the consumers to browse and manage the group of items that may be of interest to them. Simultaneously, it is another aim of the present invention to facilitate and make easy the task of the web page authors so that they may be able to better utilize the commercial possibilities of their wares. It is yet another aim of the present invention to enable consumers to browse, analyze and mine the updates and changes that items of interest to them undergo.

Conventional approaches to address the aforementioned problems generally fall into two categories.. In one category, database systems have supported triggers that examine the data after an update and initiate certain actions. However, such triggers are usually set and used by database administrators rather than by end users. Certain web pages allow "alerts" to be setup by a consumer and when the page undergoes a change a notification is sent to said consumer. However, such alerts are not fine-grained to be set on individual items or on certain attributes of said items. Furthermore, alerts are typically limited to a single web page and do not "span" across multiple web pages. In online networked systems many web pages "pull" advertisements which are integrated into web pages. However, these advertisements are related to products that are being advertised and not related to activities that a user may wish to undertake, e.g., WATCH or MONITOR a product.

Embodiments of the present invention address deficiencies in the aforementioned conventional approaches and by integrating new actionable content on to web pages. The resulting system has the ability to watch, monitor and enable transactions, coupons and advertisements related to certain items on web pages. This system responds to changes made to information which satisfies consumer-stated criteria by notifying the consumer and, in some cases, by taking actions on behalf of the consumer. The system allows consumers to inter-link changes across multiple web pages and to examine, i.e., browse, such linked changes. In one embodiment inter-linked changes may be viewed as a historical sequence of states of said changes relating to an item or a group of items.

In one embodiment the author of the web page is allowed to specify where actionable content is to be placed on a web page. The author may specify a web page template that designates a placeholder for a certain kind of actionable content, called a "virtual button". Thus, every page on that website which uses that template will have the corresponding virtual button object. No configuration or customization is needed at this point to define the virtual button. Thus, the demands on the page author are simple and uncomplicated. In a second and subsequent phase the virtual button discovers its "web page context", e.g., the URL of the web page on which it has been placed, its position on the web page, and which items are present on that page, etc. The virtual button generates a unique and deterministic identifier in the sense that under the same set of conditions the identifier will be non-random and repeatable. This identifier is called a "lookup identifier". Using the lookup identifier, the virtual button connects with one or more servers, called the backend system, using a communication medium such as the internet, and informs the backend system of its identifier and web page context. The backend system responds with some subject (product) identifier such as SKU or GTIN etc. that uniquely identifies a product, or informs the virtual button that such a mapping can not found at this time. The backend system may consult databases or association tables that map lookup identifiers to subjects (products) to formulate its response. If a mapping is found the backend system communicates said mapping to the virtual button which may now decide to display some information, e.g., open up a popup window to show product information or where the product may be purchased. In those cases where a mapping is not found, the backend system may initiate steps to map this virtual button identifier to a subject (product). This could be done by alerting a human to manually determine a mapping. The human curator may consult the web page wherein the virtual button has been placed, consult catalogs that list possible subjects (products) and if a mapping can be determined, it may be manually inserted into the virtual button.

It is also possible that artificial intelligence software is used to determine a mapping wherein software peruses the web page to determine the subject of the web page using natural language processing. It is also possible to envision a human-machine collaboration to determine possible mappings, for example, the machine could determine several possible subjects (products) and the human makes a final selection.

It is important to note the asynchronous nature of the process described above. The page author places the placeholder object on a web page or defines a web page template to contain a placeholder. The placeholder object then, at a later time, discovers and constructs a communications mechanism with a backend system. Thus the placement of actionable content and mapping of actionable content to a group of items are made in conceptually distinct phases, perhaps executed by different technicians and technologies. Such separation of responsibilities simplifies the task of authoring web pages and managing the mapping of actionable content to items so that e-commerce may be facilitated through intermediate entities, as shown in later expositions.

In certain embodiments the actionable content placed on a web page and mapped to a group of items may autonomously decide to make itself visible or invisible to a consumer visiting the web page. This self-presenting mode may be governed by a set of policies, e.g., the actionable content may decide to make itself invisible if the quantity of product at hand falls below a threshold level. Thus, actionable content may be selectively presented to or hidden from groups of consumers.

The invention described herein and its various embodiments envision the construction of an inter-linked set of items of interest to a consumer and the facilities that allow said consumer to browse and manage said group of objects. It is envisioned that said consumer is made aware of changes to the group of items and may view the changes in the form of various user interface systems such as graphs, time series and other visualization technologies.

In accordance with one aspect of the invention, a method is provided in which a web page to be rendered by a web browser is received. The web page includes a placeholder object that is to be subsequently replaced with a user-selectable icon. In response to loading the web page, a lookup identifier is generated by the placeholder object based at least in part on the context of the web page in which the placeholder object is located. After the web page is loaded, the lookup identifier is transmitted to a backend server over a communications network. At a subsequent time that arises in an asynchronous manner, data relating to one or more content items being presented on the web page is received from the backend server. The placeholder object is replaced with the user-selectable icon. The user-selectable icon has a functionality determined at least in part on the data received from the backend server.

In accordance with another aspect of the invention, at least one of the content items is a product available for purchase.

In accordance with another aspect of the invention, the icon has a functionality that allows a user to purchase the product.

In accordance with another aspect of the invention, the icon has a functionality that allows a user to monitor changes in state information associated with the product, the state information being available to the backend server.

In accordance with another aspect of the invention, the functionality of the icon is changeable over time based on changes in the state information.

In accordance with another aspect of the invention, the placeholder object is invisible to viewers of the web page.

In accordance with another aspect of the invention, the state information includes attributes associated with the product.

In accordance with another aspect of the invention, the attributes includes price and/or an available quantity.

In accordance with another aspect of the invention, a method is provided in which a web page to be rendered by a web browser is authored. The web page includes a placeholder object that is provisioned during the authoring. Functionality is assigned to the placeholder object after the web page is loaded by the web browser. The assignment, which occurs at a time after the web page is loaded, arises in an asynchronous manner. The placeholder object is transformed into a user-selectable icon that is configured to implement the functionality upon user activation of the icon.

In accordance with another aspect of the invention, assigning the functionality to the placeholder object includes receiving information mapping a content item presented on the web page to the user-selectable icon.

In accordance with another aspect of the invention, the received information includes information describing a state of the content item.

In accordance with another aspect of the invention, assigning the functionality to the placeholder object includes using a lookup identifier generated by the placeholder object to query a backend server over a communications network as to a state of the content item.

In accordance with another aspect of the invention, the functionality of the user-selectable is executable on the content item.

In accordance with another aspect of the invention, the assigned functionality is changeable over time based on changes to the state of the content item.

In accordance with another aspect of the invention, the mapping remains constant over time and is user-independent.

In accordance with another aspect of the invention, the functionality of the icon is determined by data reflecting a state of a content item presented on the web page, the data being obtained over a communications network.

In accordance with another aspect of the invention, the functionality of the icon is determined when the data meets one or more conditions.

In accordance with another aspect of the invention, the functionality of the icon allows a user to purchase the content item, the one or more conditions including a specified target price of the content item.

In accordance with another aspect of the invention, the icon is dynamically renderable on the web page such that its visibility on the web page is determined by the data reflecting the state of the content item.

In accordance with another aspect of the invention, the content item is a product and the user-selectable icon is dynamically renderable on the web page such that it is invisible on the web page when the data received from the backend server indicates that the product is currently unavailable.

In accordance with another aspect of the invention, a computer system is described in which a web browser is implemented. The computer system includes a computer processor programmed to execute a process comprising: loading a web page using a web browser, the web page including a placeholder object that is provisioned during authoring; after the web page is loaded, causing the web browser to transmit a lookup identifier generated by the placeholder object to a backend server over a communications network; responsive to transmission of the lookup identifier, receiving from the backend server information mapping a content item presented on the web page to a user-selectable icon, the mapping information including state information that describes a state of the content item; and responsive to receipt of the information, causing the placeholder object to be replaced with the user-selectable icon, the user-selectable icon having a functionality determined at least in part on the mapping information received from the backend server.

In accordance with another aspect of the invention, a server is described that includes a computer processor programmed to execute a process comprising: receiving from a web browser over a communication network a lookup identifier generated by a placeholder object that is included in a web page loaded by the web browser, the lookup identifier including information associated with the web page; based on the received information, mapping a content item presented on the web page to a user-selectable icon to obtain mapping information that includes state information describing a state of the content item; and transmitting the mapping information to the web browser over the communication network to cause the web browser to replace the placeholder object with a user-selectable icon, the user-selectable icon having a functionality determined at least in part on the mapping information.

### BRIEF DESCRIPTION OF THE DRAWINGS

The inventions will now be more particularly described by way of example with reference to the accompanying drawings. Novel features believed characteristic of the inventions are set forth in the claims. The inventions themselves, as well as the preferred mode of use and further objectives and advantages thereof, are best understood by reference to the following detailed description of the embodiment in conjunction with the accompanying drawings, in which:

FIG. 1 shows an example of a WATCH virtual button integrated on a web page related to a product (digital camera) being represented on a web page.

FIG. 2 shows an example of a placed actionable content related to an item on a web page and the associated product database.

FIG. 3 shows the process flow for integrating a virtual button on a web page and associating a mapping with that virtual button.

### DETAILED DESCRIPTION

In the descriptions that follow, we will adopt the following usage of terms (however, the inventions presented herein shall not necessarily be limited by such usage): The words "web page", in general, denote a set of information objects being displayed on a computer monitor or other display and accessible through a web browser such as Internet Explorer. The term "web page being displayed" will generally refer to the process by which a web browser renders a web page causing it to be displayed on a computer monitor.

The present invention relates to the integration of actionable content elements to web pages. An actionable content element is a user-selectable icon that is related to an item being represented or displayed on the web page. A particular example of an actionable content element is known as a "virtual button". For purposes of illustration only and not as a limitation on the invention, the actionable content element or user-selectable icon will often be referred to herein as a virtual button.

Actionable content elements such as virtual buttons relate to items being displayed on a web page. A virtual button may be associated with one or more items being displayed on a web page. The items being displayed on a web page may refer to products whose descriptions are stored in databases and data stores wherein they are uniquely identified by identifiers such as a stock-keeping unit (SKU), global trade item number (GTIN), etc. For example, if a web page displays a digital camera and contains a virtual button referring to that item (the digital camera) then the item may be sold by a provider whose online location may specified by a universal resource locator (URL) on the Internet. For example, a BUY NOW virtual button may be associated with the image of a digital camera on a web page. Clicking the BUY NOW virtual button may result in online communications being established with a product supplier who supplies that digital camera.

In the embodiments to follow we will have occasion to refer to all three such entities. Thus, web pages contain virtual buttons which refer to or are associated with items on a web page. The virtual buttons in turn may be mapped to specific subjects (products).

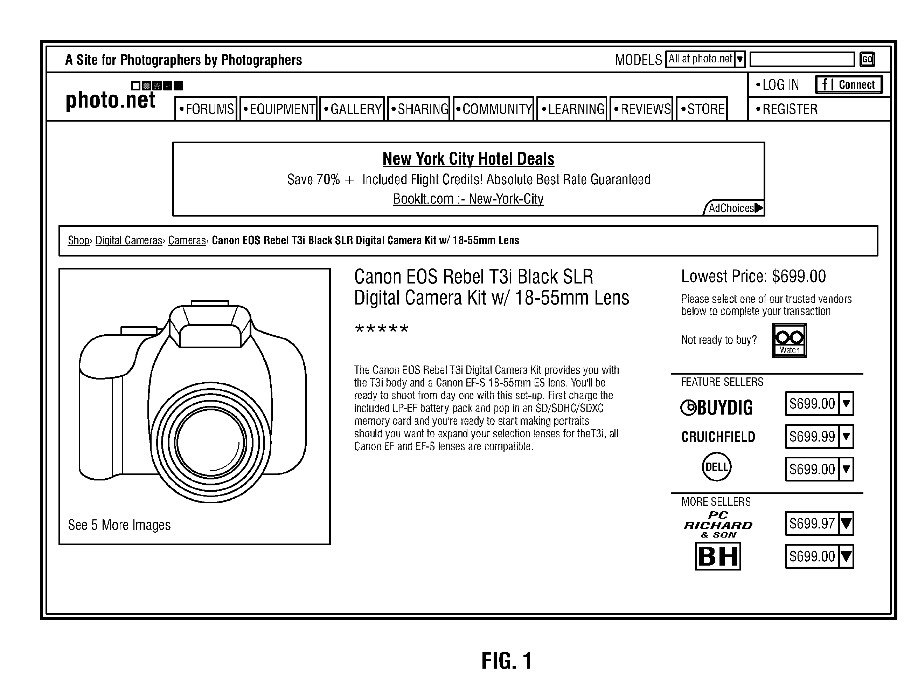

Figure 1 illustrates one example of a web page with an integrated "watch virtual button" which in this example can be used by a consumer to monitor the digital camera being displayed by the web page.

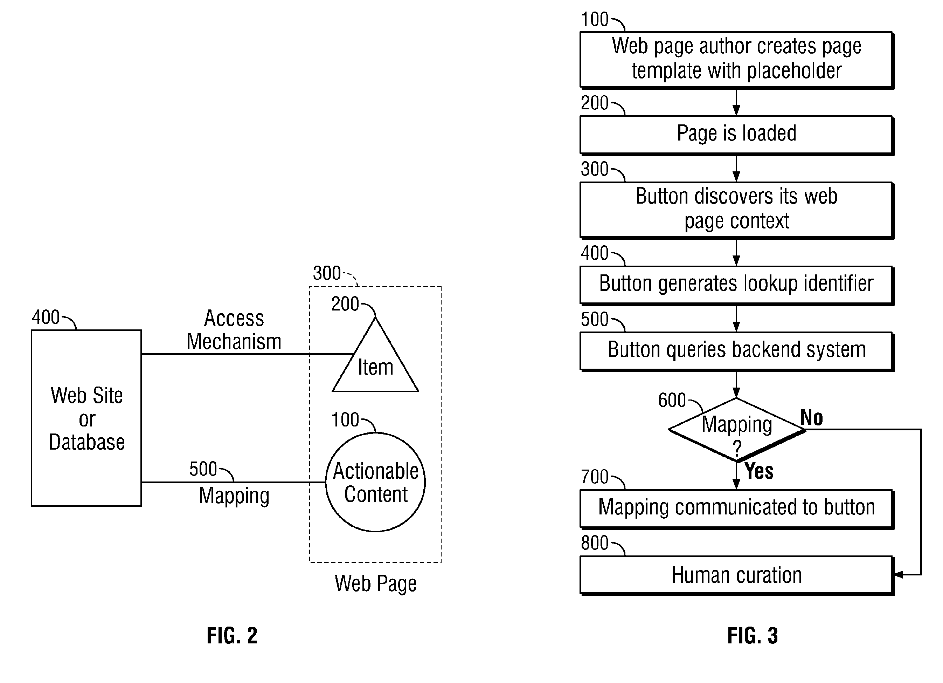

The situation is depicted in Figure 2 as follows. The figure shows a web page 300 on to which actionable content 100 has been placed with reference to an item 200. The item 200 is a web representation of a product whose state is described by data resident on a web site or a data store 400. The mapping between the placed actionable content and the product is shown as the mapping 500.

Conceptually, actionable content causes some action to be taken with respect to the content being displayed by the browser whilst rendering said web page. Examples of actionable content are BUY NOW virtual buttons, share virtual buttons, affiliate marketing virtual buttons related to purchasing a product featured on the web page, product information virtual buttons related to a product featured on the web page, and informational virtual buttons related to coupons or other promotional material related to an item being displayed on the web page.

A typical and special case of actionable content is a WATCH virtual button that allows a consumer visiting a web page to monitor a product being displayed on the web page. It may be the case that the consumer intends to purchase said item at a later time or when and if said item satisfies certain constraints.

Actionable content in accordance with prior art is manually integrated on a web page by the author of the web page. The author determines where the actionable content is to be placed on the web page and then identifies the item that is related to the actionable content. The author then maps the actionable content to the identified item. This approach has a number of drawbacks, including that the author needs to use new tools and mechanisms to integrate the actionable content which interrupts the editorial process. The process also limits the adoption of the virtual button as the author of the web page may not be the one responsible for monetizing the web page by creating the mapping between the actionable content and the item.

In accordance with one or more embodiments, an asynchronous actionable content system is provided that enables authors of web pages to quickly and easily integrate actionable content on a web page. The system is asynchronous in the sense that it decouples the web page authoring considerations from the business aspects, e.g., monetization of the items being displayed on the web page.

The actionable content system in accordance with one or more embodiments separates the actionable content placement process into two phases.

In the first phase the author of the web page identifies the location on the web page where the actionable content could appear. An invisible placeholder is placed at that location. This phase may be fully automated through content management systems etc., and generally requires no new or extra steps to be performed by the author. Alternatively, the author may define a web page template for every page on the website. The template specifies a placeholder that exists on every page published by that website. No further actions or knowledge is required of or needed by the page author. In particular the author does not know what kind of virtual button will be placed at that placeholder and under what conditions the virtual button will become visible or become operational.

For example, as shown in Figure 3, assume that the website author is engaged in the process of publishing a web magazine whose pages may contain descriptions or material about many commercial products. The author defines a template, step 100, that allows placeholders (virtual buttons) to be defined on every page of the web magazine.

When a web page with a placeholder is loaded (step 200), the virtual button becomes active and discovers its web page context (step 300). This context may consist of the web page URL, the location on the page where the virtual button has been placed, etc. The virtual button now generates a unique identifier called a "lookup identifier" (step 400). This identifier is unique to that virtual button and deterministic in the sense that the same set of conditions generate the same identifier.

The virtual button uses the lookup identifier to query a backend system over an available communication channel, e.g., the Internet (step 500). The purpose of this communication is to determine the subject of the virtual button, i.e., the product that is the subject of the item on the web page containing the virtual button. In step 600 the backend system attempts to determine if a mapping can be defined between the item on the web page where the virtual button is being displayed and the corresponding subject (product) of that item. The backend system uses the web page context communicated to it by the virtual button and the lookup identifier to figure out the desired mapping. If a mapping is discovered the SKU, GTIN or other identifying information is communicated to the virtual button by the backend system (step 700). If in case such a mapping can not be defined the system may either return a failure code to the virtual button or call in a more complex human-machine curation service.

The human-machine curation service may attempt to use natural language parsing and other techniques to glean the subject matter of the web page on which the item and the virtual button are being displayed. From this analysis, the curation service may be able to infer possible matches. It may then chose of the inferred mappings or ask for human intervention to make a selection.

The curation service may identify what the web page is about by several means in order to accomplish the task of mapping an actionable content element to said web page. For example, manual processing or automated processing of the web page could be undertaken. In automated processing, for example, natural language processing technology could be used. Alternatively, a combination of manual and automated processing techniques could be used. For example, an automated process may determine a set of candidate products and a manual process may be used to select from amongst these candidates. Mapping may also be outsourced by using a crowdsourcing service such as Amazon Mechanical Turk.

The curation service may use many criteria to determine when a mapping is feasible:

Number of page views of the original underlying web page

Freshness of the original underlying web page

It is to be noted that the mapping is dynamic and can be adjusted without touching the original web page. For example, if desired the mapping may be modified to point to another product, may be deleted, changed, etc. Detailed analytics may be collected and provided to the page author (i.e., web page owner) including real time dashboards and summary reports, etc.

The system can also automatically crowd source pages that discuss a specific product (that is mapped by the above process) and create a "mentions" model where users may see where there is more information about the product they are interested in. That is, the system then back feeds users to the web pages based on the collected URLs, driving new traffic to the participating sites.

### EXTENSIONS TO THE PREFERRED EMBODIMENT

The embodiments of the present invention described above show how actionable content (e.g., virtual buttons) may be placed on a web page and a mapping derived that allows the user to execute actions on mapped objects, such as a watch virtual button on a web page that is mapped to a specific product. Watch virtual buttons are an example of actionable content that may be used by users who are not ready to make a purchase but are potentially interested in buying the product at a later time. The watch virtual button allows users to express an interest in a certain product and in exchange to be alerted when changes occur to certain properties of said product.

Users are allowed to monitor changes to products by allowing virtual buttons to use popup menus to display attributes of products. Thus, once a virtual button has a defined mapping with a specific subject (product), some of the attributes of that product may be displayed as a popup menu by the corresponding virtual button. For example, the popup menu on the virtual button may display PRICE of an item. The consumer may then be afforded a choice to monitor the price of the item. Any changes to the price of that product may be communicated to the user periodically at set time intervals.

In some embodiments the consumer may wish to monitor changes to the price of a product and, moreover, he may wish to impose some criteria upon the price changes, such as a 20% decrease in the price.

The process of monitoring or "watching" an item is envisaged to include a variety of techniques. For example, a simple checking procedure is envisaged in which the system checks multiple times a day if any changes have occurred to a product or item. If any changes have occurred the system may verify if any user specified conditions have been met and issue proper alerts or take other specified actions.

As an example, suppose a woman is shopping for a dress and sees an item displayed on a web page that she likes and may want to purchase it. In the described embodiment, there may be a watch virtual button mapped to a product (dress) and the woman may click the watch virtual button to express her interest in the target product.

In response to her action the system will display attributes related to the target product, possibly as a pop-up menu. The pop-up menu may be manipulated by the woman to specify monitoring conditions on the dress. For example, if the price of the dress is too high for the woman's liking at that time, she may manipulate the pop-up menu to specify that price reductions of the dress under consideration to be monitored and that she is to be alerted if a later price reduction satisfies her specified conditions.

Pop-up menus may display a variety of attributes depending on the schema of the target object. For example, the attributes may include Price, Color, and Size. The attributes may be selected by the consumer, for example, by "clicking" with a cursor pointing device. Selected attributes can be identified on screen by check marks.

A user who has constructed his own Watch List (of all the items he is watching) may browse such a list. Specific entries on such a list may be linked to specific target products and may lead the user to web pages that describe and display those products. Thus, the Watch List entries act as bookmarks for the target products and may be used as such by a user.

Furthermore, entries on the Watch List may be integrated into spreadsheets encapsulating certain models and modeling processes. Thus, a user may be afforded deeper analytical understanding of the items he is monitoring by such usages of the Watch List. For example, a spreadsheet may be used to record price fluctuations of a target product over time. Such a record of a product may be viewed as a temporal view of the price of said product, i.e., a sort of "time tunnel" in which the watched products present themselves with attributes differing over time.

It is thus seen that the Watch List forms an inter-linked collection of products and such a Watch List itself may be browsed using web techniques and as such may be thought of as a network of objects overlaid on web pages.

Embodiments of the present invention envisage a system that can manage a large number of such watching, monitoring and transactional activities.

### FURTHER EXTENSIONS TO THE PREFERRED EMBODIMENT

The foregoing has described the actionable content system with particular reference to a WATCH virtual button as a preferred embodiment. Other embodiments have described the operation of a BUY NOW virtual button, etc. We now describe another group of actionable content related to promotional material such as advertisements, coupons and informational elements.

The main feature of this embodiment is that actionable content placed on a web page remains invisible or becomes visible to visitors of said page if certain conditions are met. These conditions may relate to the state of the product as reflected by the underlying product database or data store. For example, consider an actionable content of the type BUY NOW, i.e., a virtual button of type BUY NOW, placed on a web page and mapped to a specific product. It is to be assumed then that when the virtual button is displayed to a visitor, the visitor will have an option to purchase said product. However, if the said product is unavailable, i.e., sold out as indicated by inventory calculations on data in the database, then it may be more preferable not to display the BUY NOW virtual button. One may prefer not to show a virtual button at all in this case, or to render the BUY NOW virtual button as "invisible". Alternatively, a different type of actionable content may be made visible, e.g., "ADD TO WATCH LIST virtual button.

The foregoing discussion highlights the main points of the present embodiment. Actionable content is placed by the web page author at the time of creating the web page. An asynchronous process then matches the placed content with the specific product in a database or data store. As such the state of the product is subject to change because of database updates. As the database is updated, various conditions may become true, e.g., the quantity on hand of the product may change. This may cause one or more actionable content placed on web pages to be reconsidered.

Contemporaneously with the matching process, we envision custom logic to be attached to the placed content that decides on the "display" properties of said object, i.e., whether the placed object is to be visible or invisible. This attachment could, for example, be done by appropriate JavaScript and CSS (Cascading Style Sheets).

Furthermore, with reference to the foregoing example, it may also be noted that a policy may be defined that determines whether the placed actionable content is to be displayed or an alternative content is to be displayed. This policy could be made dependent on the state of the data representing the said object. For example, we could compute via a JavaScript function on the backend database of the mapped product to determine if sufficient quantities of said object exist in inventory and use the results to determine the policy to follow in the displaying of the content.

Several items are noteworthy about the foregoing discussion. First, prior art discusses numerous and various techniques that govern the presentation of content, such as advertisements, based on the properties attributed to a visitor, or other external targeting criteria and policies. The term "external" refers to the fact that these policies are not based on the current state of the database representing the e-commerce objects. Rather these policies reflect properties of the users, manufacturers of the products, or dictates of the general advertisers who have business relationships with the underlying web site, etc. However, prior art fails to teach the dynamic rendering of content, i.e., making content visible or invisible, through a policy mechanism based on the state of the matched object, as computed on the data representing that object, said computation being carried out when the visitor visits the web page. As another distinguishing feature it should be noted that a combination of an external and internal policy is made possible by our embodiment. For example, an internal policy may transmit data to a content delivery system which may then take said data into consideration before delivering an advertisement or other content to be placed dynamically on the web page.

Such internal policies, i.e., policies based on internal database state that regulate the display of content placed on web pages, leads to self-regulating virtual buttons.

A large amount of prior art deals with the placement of advertisements (ads) on web pages and there are several similarities and differences between virtual buttons and ads. Both ads and virtual buttons are placed on web pages and "call home" for content. One way to think of this situation is that it is akin to a "window" on a web page where 3rd party content appears. (This is also true of "Like" virtual buttons and "Share" virtual buttons on many web pages.)

With ads the content in a "window" is going to vary based on time and sometimes based on user who is visiting the page. Effort is made to make the ad relevant to the content on the page but a distinct is preserved between the ad content and the content of the page. Ads are relevant to the page content but do not "represent" the page content. For example, a web page may about the city of Paris, France may show an ad for a hotel in Paris but also may show an ad for a hotel in London, U.K.

In contrast, a watch virtual button placed on a web page gets permanently mapped to a specific product and from that point on the virtual button is associated with that particular product for every user and for every time instant, i.e., it is independent of time and user.

The actual content of the virtual button may change as the quantity of the product changes, its price changes, new merchants start selling the product, etc., but the mapping between the virtual button and its object (product) is constant and final.

Another distinction is that our mapping between a virtual button and its object is exactly that--between the virtual button and the object rather than between the web page and the object. So, if a web page has three products on it, we may have three watch virtual buttons on that page, each virtual button mapped to one specific product. Ads target an entire page, not products within a page.

Since ads are time dependent a user might see different ads at different times on the same page. This means that there is no sense in thinking of ads as being "stateful" or dependent on the state of the database containing the mapped product because the user may never see that ad again. But since virtual buttons are permanently mapped to a particular product, we can make virtual buttons stateful and interactive to the user.

### BENEFITS OF ACTIONABLE CONTENT SYSTEM

The actionable content system may provide many benefits including the following.

Revenue may be recognized on all phases: Buy Now, when a purchase happens, after deferral, etc.

The web page author does not need to use any new technologies or tools or new processes to integrate actionable content on to his web page.

The process is fully asynchronous and enables publishing of the post content and product mapping to occur after the web page has been published. This is not the case in prevalent online advertisement models.

Actionable content drives re-engagement and collects "mentions" for the products and drives new and returning traffic to the web pages.

The system provides detailed analytics about users and the products that they are interested in.

The system is preferably implemented in a computer server system that communicates with a plurality of client devices operated by the web page authors and users of the system. The client devices communicate with the server system over a communications network, which may comprise any network or combination of networks including, without limitation, the Internet, a local area network, a wide area network, a wireless network, and a cellular network. The client devices operated by users and web page authors may comprise any computing device that can communicate with the computer server system including, without limitation, personal computers including desktops, tablets, notebooks, and smart phone devices.

The processes may be implemented in software, hardware, firmware, or any combination thereof. The processes are preferably implemented in one or more computer programs executing on a programmable computer system including a processor, a storage medium readable by the processor (including, e.g., volatile and non-volatile memory and/or storage elements), and input and output devices. Each computer program could be a set of instructions in a code module resident in random access memory of the computer. Until required the program instructions could be stored in another computer memory (e.g., in a hard drive, or in a removable memory such as an optical disk, external hard drive, memory card, or flash drive) or stored on another computer system and downloaded via the Internet or some other network.

Accordingly, the foregoing descriptions and attached drawings are by way of example only, and are not intended to be limiting.

While the present inventions have been illustrated by a description of various embodiments and while these embodiments have been set forth in considerable detail, it is intended that the scope of the inventions be defined by the appended claims. It will be appreciated by those skilled in the art that modifications to the foregoing preferred embodiments may be made in various aspects. It is deemed that the spirit and scope of the inventions encompass such variations to be preferred embodiments as would be apparent to one of ordinary skill in the art and familiar with the teachings of the present application. Other embodiments of the invention are summarized in the following numbered paragraphs:
1. A method, comprising:
   receiving a web page to be rendered by a web browser, the web page including a placeholder object that is to be subsequently replaced with a user-selectable icon;
   in response to loading the web page, generating a lookup identifier with the placeholder object based at least in part on the context of the web page in which the placeholder object is located;
   after the web page is loaded, transmitting the lookup identifier to a backend server over a communications network;
   at a subsequent time that arises in an asynchronous manner, receiving from the backend server data relating to one or more content items being presented on the web page; and
   replacing the placeholder object with the user-selectable icon, the user-selectable icon having a functionality determined at least in part on the data received from the backend server.
2. The method of paragraph 1 wherein at least one of the content items is a product available for purchase.
3. The method of paragraph 2 wherein the icon has a functionality that allows a user to purchase the product.
4. The method of paragraph 2 wherein the icon has a functionality that allows a user to monitor changes in state information associated with the product, the state information being available to the backend server.
5. The method of paragraph 4 wherein the functionality of the icon is changeable over time based on changes in the state information.
6. The method of paragraph 1 wherein the placeholder object is invisible to viewers of the web page.
7. The method of paragraph 4 wherein the state information includes attributes associated with the product.
8. The method of paragraph 7 wherein the attributes includes price and/or an available quantity.
9. A method, comprising:
   authoring a web page to be rendered by a web browser, the web page including a placeholder object that is provisioned during the authoring;
   assigning a functionality to the placeholder object after the web page is loaded by the web browser, the assignment occurring at a time after the web page is loaded which arises in an asynchronous manner,; and
   transforming the placeholder object into a user-selectable icon that is configured to implement the functionality upon user activation of the icon.
10. The method of paragraph 9 wherein assigning the functionality to the placeholder object includes receiving information mapping a content item presented on the web page to the user-selectable icon.
11. The method of paragraph 10 wherein the received information includes information describing a state of the content item.
12. The method of paragraph 10 wherein the content item is a product or service offered for acquisition by a user.
13. The method of paragraph 10 wherein assigning the functionality to the placeholder object includes using a lookup identifier generated by the placeholder object to query a backend server over a communications network as to a state of the content item.
14. The method of paragraph 9 wherein the functionality of the user-selectable is executable on the content item.
15. The method of paragraph 10 wherein the mapping information is received over a communications network.
16. The method of paragraph 11 wherein the assigned functionality is changeable over time based on changes to the state of the content item.
17. The method of paragraph 10 wherein the mapping remains constant over time and is user-independent.
18. The method of paragraph 9 wherein the functionality of the icon is determined by data reflecting a state of a content item presented on the web page, the data being obtained over a communications network.
19. The method of paragraph 18 wherein the functionality of the icon is determined when the data meets one or more conditions.
20. The method of paragraph 19 wherein the functionality of the icon allows a user to purchase the content item, the one or more conditions including a specified target price of the content item.
21. The method of paragraph 11 wherein the icon is dynamically renderable on the web page such that its visibility on the web page is determined by the data reflecting the state of the content item.
22. The method of paragraph 1 wherein the content item is a product and the user-selectable icon is dynamically renderable on the web page such that it is invisible on the web page when the data received from the backend server indicates that the product is currently unavailable.
23. A computer system in which a web browser is implemented, the computer system comprising:
   a computer processor programmed to execute a process comprising:
      loading a web page using a web browser, the web page including a placeholder object that is provisioned during authoring;
      after the web page is loaded, causing the web browser to transmit a lookup identifier generated by the placeholder object to a backend server over a communications network;
      responsive to transmission of the lookup identifier, receiving from the backend server information mapping a content item presented on the web page to a user-selectable icon, the mapping information including state information that describes a state of the content item; and
      responsive to receipt of the information, causing the placeholder object to be replaced with the user-selectable icon, the user-selectable icon having a functionality determined at least in part on the mapping information received from the backend server.
24. The computer system of paragraph 23 further comprising causing the lookup identifier to be generated, the lookup identifier having a deterministic relationship with a context of the web page in which the placeholder object is located.
25. The computer system of paragraph 23 wherein the context of the web page in which the placeholder object is located includes a URL specifying a network location of the web page.
26. The computer system of paragraph 23 wherein the state information includes attributes associated with the content item.
27. The computer system of paragraph 26 further comprising displaying one or more of the attributes in a pop-up window in response to a user selection of the icon.
28. The computer system of paragraph 23 wherein the content item represents a product or service being offered for acquisition to a user on the web page.
29. The computer system of paragraph 26 wherein the attributes include a price of the content item and/or an available quantity of the content item.
30. A server comprising:
   a computer processor programmed to execute a process comprising:
      receiving from a web browser over a communication network a lookup identifier generated by a placeholder object that is included in a web page loaded by the web browser, the lookup identifier including information associated with the web page;
      based on the received information, mapping a content item presented on the web page to a user-selectable icon to obtain mapping information that includes state information describing a state of the content item; and
      transmitting the mapping information to the web browser over the communication network to cause the web browser to replace the placeholder object with a user-selectable icon, the user-selectable icon having a functionality determined at least in part on the mapping information.
31. A method, comprising:
   receiving a web page to be rendered by a web browser, the web page including a placeholder object that is to be subsequently replaced with a user-selectable icon;
   in response to loading the web page, generating a lookup identifier with the placeholder object based at least in part on the context of the web page in which the placeholder object is located;
   after the web page is loaded, transmitting the lookup identifier to a backend server over a communications network;
   at a subsequent time, receiving from the backend server data relating to one or more products being presented on the web page;
   replacing the placeholder object with the user-selectable icon, the user-selectable icon having a functionality determined at least in part on the data received from the backend server; and
   causing the user-selectable icon to be invisible to viewers viewing the web page when the data received from the backend server meets threshold criteria of availability.

## Claims

1. A method, comprising:
receiving a web page to be rendered by a web browser, the web page including a placeholder object that is to be subsequently replaced with a user-selectable icon;
in response to loading the web page, generating a lookup identifier with the placeholder object based at least in part on the context of the web page in which the placeholder object is located;
after the web page is loaded, transmitting the lookup identifier to a backend server over a communications network;
at a subsequent time that arises in an asynchronous manner, receiving from the backend server data relating to one or more content items being presented on the web page; and
replacing the placeholder object with the user-selectable icon, the user-selectable icon having a functionality determined at least in part on the data received from the backend server.

2. The method of claim 1 wherein at least one of the content items is a product available for purchase.

3. The method of claim 2 wherein the icon has a functionality that allows a user to purchase the product.

4. The method of claim 2 wherein the icon has a functionality that allows a user to monitor changes in state information associated with the product, the state information being available to the backend server.

5. The method of claim 4 wherein the functionality of the icon is changeable over time based on changes in the state information.

6. The method of claim 1 wherein the placeholder object is invisible to viewers of the web page.

7. The method of claim 4 wherein the state information includes attributes associated with the product, in particular wherein the attributes includes price and/or an available quantity.

8. The method of claim 1 wherein the content item is a product and the user-selectable icon is dynamically renderable on the web page such that it is invisible on the web page when the data received from the backend server indicates that the product is currently unavailable.

9. A computer system in which a web browser is implemented, the computer system comprising:
a computer processor programmed to execute a process comprising:
loading a web page using a web browser, the web page including a placeholder object that is provisioned during authoring;
after the web page is loaded, causing the web browser to transmit a lookup identifier generated by the placeholder object to a backend server over a communications network;
responsive to transmission of the lookup identifier, receiving from the backend server information mapping a content item presented on the web page to a user-selectable icon, the mapping information including state information that describes a state of the content item; and
responsive to receipt of the information, causing the placeholder object to be replaced with the user-selectable icon, the user-selectable icon having a functionality determined at least in part on the mapping information received from the backend server.

10. The computer system of claim 9 further comprising causing the lookup identifier to be generated, the lookup identifier having a deterministic relationship with a context of the web page in which the placeholder object is located.

11. The computer system of claim 9 wherein the context of the web page in which the placeholder object is located includes a URL specifying a network location of the web page.

12. The computer system of claim 9 wherein the state information includes attributes associated with the content item.

13. The computer system of claim 12 further comprising displaying one or more of the attributes in a pop-up window in response to a user selection of the icon.

14. The computer system of claim 9 wherein the content item represents a product or service being offered for acquisition to a user on the web page.

15. The computer system of claim 12 wherein the attributes include a price of the content item and/or an available quantity of the content item.
